# EUROPÄISCHE PATENTSCHRIFT

(11) **EP 1 522 188 B1**
(45) Veröffentlichungstag und Bekanntmachung des Hinweises auf die Patenterteilung: **10.10.2007**
(21) Anmeldenummer: 04738476.3
(22) Anmeldetag: 26.04.2004
(51) Int. Cl.: H04N 5/74

(54) **BELEUCHTUNGSSYSTEM MIT SEQUENTIELLER FARBFILTERUNG UND HOCHDRUCKENTLADUNGSLAMPE**
LIGHTING SYSTEM PROVIDED WITH A SEQUENTIAL COLOUR FILTERING AND A HIGH-PRESSURE DISCHARGE LAMP
SYSTEME D'ECLAIRAGE COMPORTANT UN SYSTEME DE FILTRAGE CHROMATIQUE SEQUENTIEL ET UNE LAMPE A DECHARGE HAUTE PRESSION

(30) Priorität: 30.04.2003 DE 10319571
(43) Veröffentlichungstag der Anmeldung: 13.04.2005
(73) Patentinhaber: Patent-Treuhand-Gesellschaft für elektrische Glühlampen mbH, 81543 München (DE)
(72) Erfinder: HEIKE, Florian, Taipei 104, Taiwan R.O.C. (TW); HUBER, Andreas, 82216 Maisach (DE); LANKES, Simon, 14612 Falkensee (DE); OSTEN, Andreas, Taipei - Peitou (TW)
(86) Internationale Anmeldenummer: PCT/DE2004/000870
(87) Internationale Veröffentlichungsnummer: WO 2004/098182

(56) Entgegenhaltungen:
- WO-A-95/11572
- DE-A- 10 023 342
- US-A- 5 608 294

## Beschreibung

### Technisches Gebiet

Die vorliegende Erfindung bezieht sich auf Beleuchtungssysteme, die eine mit Wechselstrom betriebene Hochdruckentladungslampe und ein Farbfiltersystem aufweisen. Der Begriff Hochdruckentladungslampe wird dabei in Abgrenzung zu Niederdruckentladungslampen gebraucht. Die Erfindung bezieht sich aber insbesondere auf etwa mit Innendrücken im Bereich von 200 bar, also besonders hohen Drücken, betriebene Entladungslampen für Projektionsanwendungen.

### Stand der Technik

Das an sich bekannte Farbfiltersystem des Beleuchtungssystems ist so aufgebaut, dass es das Licht der Lampe zeitlich sequentiell filtert, wobei eine Mehrzahl Farbfilter, i. d. R. zumindest drei Farbfilter, verwendet werden. Die zeitliche sequentielle Farbfilterung ist i. d. R. periodisch bei gleich bleibender Abfolge der verschiedenen Farben. Solche Farbfiltersysteme werden insbesondere bei Projektionsanwendungen in Verbindung mit digitalen Spiegelsystemen (DMD "digital mirror device") eingesetzt, um durch unterschiedliche elektronische Steuerung der Spiegel in verschiedenen Farbphasen Bilder mit aus den Farben des Filtersystems zusammengesetzten Farben erzeugen zu können. Dabei wird ausgenutzt, dass bei ausreichend schneller Abfolge der verschiedenen Farben im menschlichen Auge ein Mischfarbeneindruck entsteht. Solche Beleuchtungssysteme sind an sich bekannt und insbesondere bei Rückprojektionsbildschirmgeräten und bei sog. Beamern, also Frontprojektionsgeräten, in weit verbreitetem Einsatz (DLP "digital light processing"). Die Erfindung bezieht sich jedoch auch ganz allgemein auf ein Beleuchtungssystem mit einer Hochdruckentladungslampe und einem zeitlich sequentiellen Farbfiltersystem.

Die Farbfiltersysteme in Projektionssystemen haben i. d. R. einen mechanischen Aufbau in Form eines um eine Achse rotierenden Rades, das aus Filtersegmenten besteht, wobei das Licht der Lampe durch das rotierende Rad gefiltert wird und sich die zeitlich sequentielle Folge durch die Rotation der verschiedenen Segmente durch den Lichtstrahl ergibt. Daher wird in diesem technischen Gebiet auch häufig von Farbrädern gesprochen. Die Erfindung ist jedoch nicht auf solche mechanischen Lösungen eingeschränkt sondern kann auch mit beliebigen anderen zeitlich sequentiellen Farbfiltersystemen realisiert werden.

Der Betrieb des Farbfiltersystems und der Wechselstrombetrieb der Lampe müssen bei erfindungsgemäßen Systemen miteinander synchronisiert oder gemeinsam getaktet bzw. getriggert werden.

Das Verfahren zum Betreiben eines Beleuchtungssystems mit einer mit Wechselstrom betriebenen Hochdruckentladungslampe und einem Farbfiltersystem, das Licht der Lampe zeitlich sequentiell mit einer Mehrzahl Farbfilter filtert, geht aus von einem Verfahren bei dem die Wechselstromversorgung der Lampe innerhalb einer vollständigen Abfolge der Farbfilterungen zumindest dreifach kommutiert. Mit dem Begriff "kommutiert" ist der Vorzeichenwechsel des Lampenstroms bzw. die Nullstelle zwischen zwei aufeinander folgenden Lampenstromphasen mit entgegengesetztem Vorzeichen gemeint.

### Darstellung der Erfindung

Der Erfindung liegt das technische Problem zugrunde, ein verbessertes Verfahren zum Betreiben eines solchen Beleuchtungssystems anzugeben.

Das Verfahren wird dadurch verbessert das mittels eines Vorschaltgeräts innerhalb von zeitlichen Abständen zwischen Kommutationen ein zeitlich konstanter Lampenstrom über einen Großteil des zeitlichen Abstands gegeben ist, wobei eine im Vergleich zu dem zeitlichen Abstand kurze Phase mit einem demgegenüber erhöhten Lampenstrom auftritt und zwischen den einzelnen Farbfilterphasen in der sequentiellen Abfolge jeweils Zwischenphasen vorgesehen sind, die den zeitlichen Bereich abdecken, in dem das Licht der Lampe durch zwei der Farbfilter gleichzeitig gefiltert wird, und bei dem die Phasen mit überhöhtem Lampenstrom zumindest teilweise in diesen Zwischenphasen liegen.

Ferner richtet sich die Erfindung auf ein entsprechend ausgestaltetes elektronisches Vorschaltgerät, ein entsprechend ausgestaltetes Beleuchtungssystem, das neben dem Vorschaltgerät auch das Farbfiltersystem umfasst, sowie, als bevorzugte Anwendungsfälle, ein Rückprojektions-Bildschirmgerät und einen Beamer.

Bevorzugte Ausgestaltungen sind in den abhängigen Ansprüchen angegeben. Dabei sind die Merkmale der Ansprüche sowie die in der folgenden Beschreibung offenbarten Merkmale jeweils sowohl im Hinblick auf den Verfahrenscharakter als auch auf den Vorrichtungscharakter der Erfindung zu verstehen, ohne dass hierzwischen im Einzelnen noch ausdrücklich unterschieden wird.

Im Stand der Technik wurde bislang die Lampe mit einer periodischen Wechselstromversorgung betrieben, deren Periode doppelt so lang wie die Periode der sequentiellen Farbfilterung ist. Dies hatte, wie sich beispielsweise aus dem Stand der Technik DE 100 23 342 A1 ergibt, den Hintergrund, dass es bei den hier bevorzugt betrachteten Projektionssystemen mittlerweile verbreitet ist, am Ende einer jeweils zwischen zwei Kommutierungen liegenden Phase des Lampenstroms eine vergleichsweise kurze Phase mit überhöhtem Lampenstrom einzuführen. Durch diese Phase überhöhten Lampenstroms können die Elektroden der Lampe (re)konfiguriert werden bzw. der Lampenbetrieb stabilisiert werden. Zu den Einzelheiten der zugrunde liegenden Phänomene des Elektrodenrückbrandes, die dem Fachmann an sich bekannt sind, wird neben dem zitierten Dokument außerdem auf die DE 100 21 537 A1 verwiesen. In diesem Zusammenhang wurde es als vorteilhaft angesehen, die Phase überhöhten Lampenstroms immer genau einem Farbfilter zuzuordnen, vgl. etwa DE 100 23 342, Absatz 19.

Die Betriebsfrequenz des Farbfiltersystems lässt sich häufig nicht ohne gravierende Nachteile erhöhen. Solche Nachteile können ein erhöhter Verschleiß eines Farbrades oder eine erhöhte Geräuschentwicklung sein. Andererseits hat sich aber herausgestellt, dass die Lampenbetriebsfrequenz, oder besser allgemeiner ausgedrückt die mittlere Kommutationsfrequenz des Lampenstroms, nicht zu niedrig sein sollte. Anderenfalls besteht die Gefahr von Bogenunruhe bei der Lichterzeugung. Dieser Zielkonflikt zwischen niedriger Betriebsfrequenz des Lampenfiltersystems einerseits und erhöhter Kommutationsfrequenz des Lampenstroms andererseits löst sich durch eine zumindest dreifache Kommutierung des Lampenstroms innerhalb einer Periode bzw. allgemeiner vollständigen Abfolge der Farbfilterung. In der WO95/11572 findet sich ein Verfahren zum Betreiben eines Beleuchtungssystems mit einem Farbfiltersystem wobei die Wechselstromversorgung der Lampe innerhalb der Farbfilterungen zumindest dreifach kommutiert.

Wie sich aus der nachfolgenden Beschreibung noch näher ergibt, muss bei der Darstellung der Erfindung nicht nur darauf Rücksicht genommen werden, dass im Prinzip auch nichtperiodische ("zeitlich sequentielle") Arbeitsweisen der Farbfilterung denkbar sind, sondern dass darüber hinaus gerade im Rahmen dieser Erfindung durch Kommutation getrennte Lampenstromphasen nicht symmetrisch sein müssen. Im eigentlichen mathematischen Sinn kann dann eine Periode des Lampenstroms auch deutlich mehr als zwei Kommutationen enthalten. Für den Lampenbetrieb kommt es jedoch auf die Kommutationen und nicht auf die strenge Periodizität an, weswegen die Erfindung einen verbesserten Lampenbetrieb bereits durch eine erhöhte mittlere Kommutationsfrequenz erzielt.

Es stellt einen bevorzugten Aspekt der Erfindung dar, dass aufeinander folgende Lampenstromphasen, die durch eine Kommutation getrennt sind, zumindest teilweise voneinander verschieden sind. Sie können in dieser Weise besonders günstig an das Betriebsschema des Farbfiltersystems und ggf. auch die technischen Rahmenbedingungen der elektronischen Steuerung des gesamten Projektionssystems angepasst werden. Insbesondere lässt sich der bereits mit Bezugnahme auf den Stand der Technik erwähnte sog. Lampenstrompuls, also die zeitliche Phase überhöhten Lampenstroms, die vorzugsweise am Ende einer durch zwei Kommutationen begrenzten Lampenstromphase, also unmittelbar vor einer Kommutation liegt, durch diesen Freiheitsgrad besonders günstig einsetzen und/oder variieren.

So kann dieser Überhöhungspuls des Lampenstroms bei den allgemein verbreiteten Farbfiltersystemen, die neben den eigentlichen Farbfiltern auch einen weißen bzw. filterfreien Bereich aufweisen, an den Anfang dieser Weißphase der Farbfilterung gesetzt werden. Im Sinne dieser Beschreibung ist dabei die Weißphase auch als eine Filterphase der Farbfilterung zu verstehen. Sie wird üblicherweise zur Verstärkung der Helligkeit eingesetzt, wobei die übrigen Farbfilterphasen für die eigentliche Farberzeugung und insbesondere die Farbsättigung verantwortlich sind. Die Lage des Überhöhungspulses zumindest teilweise am Anfang der Weißphase hat den Vorteil, dass sich die entsprechend kurzfristig erhöhte Lichterzeugung nicht durch Störungen der Farberzeugung, insbesondere nicht durch farbige Bildstörungen des projizierten Bildes, etwa Farbstreifen, bemerkbar macht. Für die Steuerelektronik ist es im Übrigen erheblich einfacher, eine erhöhte Lichterzeugung in der Weißphase, wenn gewünscht, zu verarbeiten.

Wesentlicher Punkt der Erfindung ist, Überhöhungspulse in gelegentlich als Speichen ("spokes") bezeichnete Zwischenphasen zwischen Farbfilterphasen zu setzen. Solche Zwischenphasen können eingesetzt werden, um in den Zeiten, in denen das Licht der Lampe nicht nur durch ein sondern zwei Farbfilter gefiltert wird, auszublenden oder in besonderer Weise zu behandeln. Üblicherweise geschieht dies durch Verkippen der elektronisch gesteuerten Spiegel eines DMD oder durch besondere Lichtmischtechniken. Es werden zur Farberzeugung also nur die Zeitbereiche genutzt, in denen das Licht der Lampe durch genau ein Farbfilter (einschl. des Weißbereichs) fällt. Wenn nun der Überhöhungspuls zumindest teilweise in eine solche Zwischenphase gesetzt wird, so stört er mit der erhöhten Lichterzeugung die eigentlichen Farbfilterphasen nicht bzw. weniger.

Eine besonders bevorzugte Anwendung der Erfindung sieht eine Kombination beider Möglichkeiten, also Überhöhungspulse am Anfang der Weißphase und in zumindest einer Zwischenphase, vor. Konkret zeigt das Ausführungsbeispiel einen Überhöhungspuls in der Zwischenphase vor der Weißphase der in die Weißphase hineinreicht, sowie jeweils einen Überhöhungspuls in zwei weiteren Zwischenphasen. Im Fall des Ausführungsbeispiels sind diese zwei weiteren Zwischenphasen die (im Sinne eines Rades) der Weißphase entgegengesetzten. Ferner ist vorzugsweise vor jeder Lampenstromkommutierung ein Überhöhungspuls vorgesehen.

In der beschriebenen Form kann also die Lage und auch Länge der Überhöhungspulse des Lampenstroms auf den Betrieb des Farbfiltersystems angepasst werden, indem die Zwischenphasen und der Anfang der Weißphase für die Lage ausgewählt werden und die Überhöhungspulse ferner einerseits innerhalb der Zwischenphasen, auf die eine eigentliche Farbfilterphase folgt, gehalten werden und andererseits der Überhöhungspuls vor der Weißphase in diese hinein verlängert und innerhalb dieser während des Betriebs variiert werden kann.

Insbesondere erlaubt die Erfindung dabei neben der Lampenbetriebsstabilisierung und Elektrodenformung auch eine Steuerung der Helligkeit bzw. Farbsättigung. Es hat sich nämlich herausgestellt, dass der für den Lampenbetrieb und die Elektrodenformung günstige Bereich der mittleren Länge sämtlicher Überhöhungspulse bzw. der Länge des zeitlich variablen Überhöhungspulses vor der Weißphase relativ breit ist. In diesem günstigen Bereich kann daher durch Verlängerung des Überhöhungspulses zu Anfang der Weißphase der Weißanteil und damit die Helligkeit zu Lasten der Farbsättigung erhöht oder umgekehrt bei Verkürzung die Farbsättigung zu Lasten der Helligkeit erhöht werden.

Bei einer weiteren bevorzugten Ausgestaltung der Erfindung alterniert die Polarität des Lampenstroms nicht nur über eine der genannten Kommutierungen sondern schließen sich ferner zueinander symmetrische Lampenstromphasen mit alternierender Polarität aneinander an. Diese Lampenstromphasen enthalten jeweils zwei oder mehrere kürzere Lampenstromphasen mit jeweils gleich bleibender Polarität oder in anderen Worten enthalten jeweils zumindest eine Kommutierung des Lampenstroms. Diese auf längerer Zeitskala periodische Gestaltung des Lampenstroms ist eine besonders einfache und günstige Möglichkeit, eine individuelle Anpassung der Phasen zwischen den Kommutierungen an das Farbfiltersystem oder Rahmenbedingungen der Steuerung mit der Vermeidung einer Nettogleichstromkomponente des Lampenstroms zu kombinieren. Dabei ist vorzugsweise jeweils eine Halbperiode einer Periode des Farbfiltersystems zugeordnet. In anderen Worten: Die aus zueinander symmetrischen Halbperioden zusammengesetzte Periode des Lampenstroms, die also zumindest sechs Kommutierungen entspricht, entspricht der doppelten Farbfilterperiode.

Ferner ist zur Vermeidung von Einschränkungen der Variabilität der Überhöhungspulse hierbei bevorzugt, dass die Zahl der Kommutierungen pro Halbperiode ungerade ist, vorzugsweise drei beträgt. Zur Veranschaulichung der vorstehenden Einzelheiten wird auf das Ausführungsbeispiel verwiesen.

Der bereits zitierte Stand der Technik DE 100 21 537 A1 sieht vor, die Betriebsfrequenz der Lampe zur Elektrodenformung bzw. Lampenbetriebsstabilisierung zu variieren. Im Gegensatz dazu ist im Rahmen dieser Erfindung vorzugsweise vorgesehen, die Länge und/oder die Höhe der bereits erwähnten Überhöhungspulse, jedoch nicht deren Frequenz, zu diesem Zweck einzusetzen. Zwar wäre es im Rahmen der Erfindung im Prinzip auch denkbar die Frequenz zu variieren, und zwar entweder durch entsprechende Mitsteuerung der Betriebsfrequenz des Farbfiltersystems oder durch Auslassen und Einfügen von Überhöhungspulsen in ein ansonsten unverändert bleibendes Lampenstrom-Zeitschema. Bevorzugt ist jedoch, das Lampenstrom-Zeitschema (und auch das der Farbfilterung) im Wesentlichen unverändert zu lassen und lediglich den Anteil des Überhöhungspulses an der zwischen den entsprechenden Kommutationen des Lampenstroms liegenden Lampenstromphase oder die Höhe der Lampenstromüberhöhung zu variieren. Dies hat sich als technisch einfacher herausgestellt und erlaubt im Übrigen die ohnehin vorzugsweise vorgesehene Einfügung eines Überhöhungspulses vor jeder Kommutation und nicht nur vor einigen.

Konkret ist bevorzugt, (nur) die Pulslänge (nur) des vor der und zu Anfang der Weißphase liegenden Überhöhungspulses zu variieren, die übrigen Überhöhungspulse also unverändert zu lassen. Dadurch kann gewährleistet werden, dass die übrigen, vorzugsweise in den Zwischenphasen liegenden Überhöhungspulse innerhalb dieser Zwischenphasen bleiben, in denen ohnehin nicht sehr viel Zeit zur Verfügung steht. Andererseits kann der sich in den Anfang der Weißphase hinein erstreckende Überhöhungspuls ohne gravierende Auswirkungen verlängert oder verkürzt werden, weil er die Farbmischung als solche nicht beeinträchtigt. Es wird auf die oben stehenden Ausführungen zu diesem Aspekt verwiesen.

Übliche Betriebsfrequenzen von Farbfiltersystemen liegen bei 100Hz -150Hz, so dass konventionelle Lampenstromfrequenzen zwischen 50Hz und 75Hz liegen. Die Erfindung führt hier also zu mindestens 300Hz Kommutationsfrequenz im Sinne der Zahl von Lampenstromkommutationen pro Zeiteinheit (also gegenüber einer effektiven Lampenstromfrequenz verdoppelt). Die Erfindung würde im Prinzip aber auch eine Verlangsamung der Frequenz des Farbfiltersystems ermöglichen. In diesem Zusammenhang hat es sich als bevorzugt herausgestellt, die Kommutationsfrequenz des Lampenstroms möglichst nicht unter 180Hz, vorzugsweise nicht unter 200Hz zu setzen. Ab diesen genannten Werten ergeben sich besonders günstige Betriebsbedingungen in der Lampe, so dass eine Anwendung der Erfindung mit dementsprechend verringerten Farbfiltersystemfrequenzen durchaus attraktiv sein kann.

Das den Lampenstrom erzeugende elektronische Vorschaltgerät muss in der erfindungsgemäßen Weise abgestimmt auf den Betrieb des Farbfiltersystems arbeiten können. Dazu kann im Prinzip ein externes Taktsignal zur Steuerung des Farbfiltersystems und des Vorschaltgeräts oder auch ein an dem Farbfiltersystem (etwa an einer Markierung des Farbrades) abgegriffenes Taktsignal oder schließlich auch ein von dem Vorschaltgerät erzeugtes Taktsignal zur Steuerung des Farbfiltersystems verwendet werden. Vorzugsweise weist jedoch ein erfindungsgemäßes Vorschaltgerät einen Signaleingang für ein entsprechendes digitales Taktsignal auf, das seinerseits in der elektronischen Steuerung eines entsprechenden Beleuchtungssystems, insbesondere eines Rückprojektions-Bildschirmgeräts oder eines Beamers, erzeugt wird. Insbesondere kann es sich dabei um ein sog. SCI-Signal handeln, dessen digitale Pulsflanke, insbesondere die ansteigende, die zeitliche Lage eines Lampenstrom-Überhöhungspulses festlegt, und zwar vorzugsweise praktisch instantan. Weiterhin gibt die zeitliche Länge des digitalen SCI-Pulses die zeitliche Länge des Überhöhungspulses vor. Dabei kann vorgesehen sein, dass die zeitliche Länge eines digitalen SCI-Pulses die zeitliche Länge nicht des im Wesentlichen gleichzeitigen sondern des darauf folgenden Überhöhungspulses des Lampenstroms bestimmt. Hierdurch wird vermieden, dass der SCI-Puls nicht länger als der Überhöhungspuls des Lampenstroms dauern darf. Wiederum wird auf das Ausführungsbeispiel verwiesen.

Wie bereits zuvor bemerkt richtet sich die Erfindung nicht nur auf ein Betriebsverfahren sondern auch auf ein entsprechend ausgestaltetes elektronisches Vorschaltgerät, das, ansprechend auf ein für den Betrieb des Farbfiltersystems stehendes und vorzugsweise von außen angegebenes Taktsignal, die Hochdrucklampe mit Wechselstrom bei zumindest dreifacher Kommutierung des Wechselstroms innerhalb einer vollständigen Abfolge der Farbfilterungen versorgen kann. Sie bezieht sich insbesondere auf ein solches Vorschaltgerät in der handelsüblichen Form, in der dies mit der Hochdrucklampe und deren Reflektor kombiniert ist.

Zudem richtet sich die Erfindung auf ein Beleuchtungssystem, das neben dem genannten Vorschaltgerät, mit oder ohne Lampe und Reflektor, zudem das Farbfiltersystem enthält, und zwar insbesondere in der Form eines Rückprojektion-Bildschirmgeräts, etwa eines Fernsehgeräts, oder in Form eines Beamers.

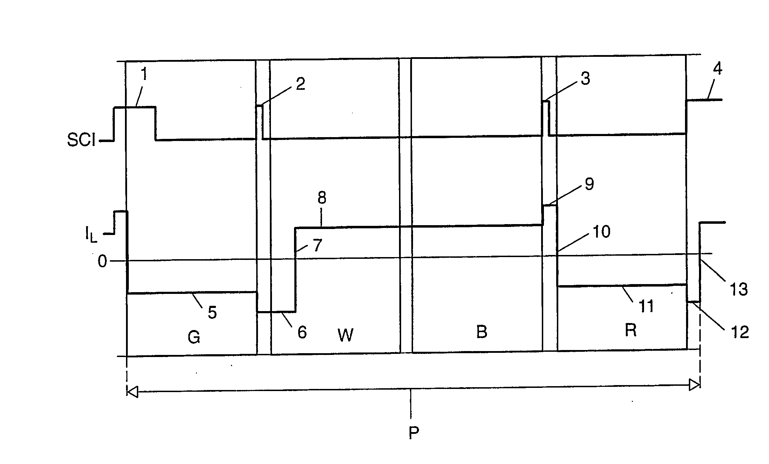

### Kurze Beschreibung der Zeichnung

Im Folgenden wird die Erfindung anhand eines konkreten Beispiels näher erläutert, wobei die dabei offenbarten Merkmale zum einen sowohl für den Vorrichtungscharakter als auch den Verfahrencharakter der Erfindung von Bedeutung sind und ferner auch in anderen Kombinationen erfindungswesentlich sein können.

Die Figur zeigt ein schematisches Zeitverlaufsdiagramm eines ein erfindungsgemäßes elektronisches Vorschaltgerät steuernden SCI-Taktsignals sowie eines Lampenstroms I_{L} durch eine Hochdruckentladungslampe.

### Bevorzugte Ausführung der Erfindung

In der Figur stellt die obere, mit SCI bezeichnete durchgezogene Linie ein von einem erfindungsgemäßen Beamer, konkret dessen elektronischer Steuerung, ausgegebenes und in einen Eingang eines erfindungsgemäßen Vorschaltgeräts eingegebenes Taktsignal dar. Dieses Taktsignal besteht aus zeitlich aufeinander folgenden digitalen Pulsen gleicher Höhe, jedoch unterschiedlicher Länge. Die Figur zeigt vier Pulse 1, 2, 3 und 4, wobei die Pulse 1 und 4 eine große Länge von über 900 µs und die Pulse 2 und 3 eine kleine Länge von weniger als 150 µs aufweisen.

Darunter liegend ist eine mit I_{L} bezeichnete durchgezogene Kurve eingezeichnet, die den Lampenstrom durch eine Hochdruckentladungslampe darstellt. Diese Lampe wird von dem Vorschaltgerät versorgt, wobei Vorschaltgerät und Lampe ebenfalls Bestandteile des erfindungsgemäßen Beamers sind.

Der Beamer weist ferner ein Farbfiltersystem in Form eines an sich konventionellen Farbrades auf, das vier Segmente mit den Farben blau, rot und grün sowie weiß (also filterfrei) enthält. Die drei Farbfilter und der Weißbereich bilden jeweils 90°-Segmente des Farbfilterrades und sorgen bei Rotation des Farbfilterrades und Durchtritt eines Lichtbündels der Lampe für eine periodische Sequenz der drei Farben und des Weißlichts. Diese Sequenz ist in der Figur dargestellt durch die von links nach rechts (in der Richtung der von links nach rechts gedachten Zeitachse) aufeinander folgenden Flächen G, W, B und R, wobei dementsprechend vor der linken Fläche G wiederum eine Fläche R und hinter der rechten Fläche R wiederum eine Fläche G hinzugedacht werden kann. Die in der Figur mit P bezeichnete Periodendauer des Farbfiltersystems, die alle vier Flächen G, W, B, R umfasst, entspricht bei diesem Beispiel 8,3 ms, also einer Frequenz von 120 Hz.

Man erkennt, dass der Lampenstrom I_{L} über die Länge der Farbphasen G ein mit 5 bezeichnetes Plateau mit negativem Vorzeichen und darauf folgend ein vergleichsweise kürzeres, betragsgrößeres und ebenfalls negatives Plateau 6 aufweist. Auf das Plateau 6 folgt ein Vorzeichenwechsel, also eine Kommutation des Lampenstroms I_{L}, die mit 7 bezeichnet ist. Daran schließt sich ein im Vorzeichen positives und zu dem Plateau 5 betragsgleiches weiteres Plateau 8 mit einer im Vergleich zu dem Plateau 5 deutlich vergrößerten Länge an. Darauf folgt ein zu dem Plateau 6 betragsgleiches, jedoch vorzeichenpositives und im Übrigen deutlich kürzeres Plateau 9. Darauf folgt eine weitere Kommutierungsstelle 10, ein dem Plateau 5 entsprechendes Plateau 11 und ein darauf folgendes im Vorzeichen dem Plateau 6, in der Länge jedoch dem Plateau 9 entsprechendes und zu beiden betragsgleiches Plateau 12 des Lampenstroms I_{L}. Daran schließt sich eine Kommutierungsstelle 13 an. Bei diesem Beispiel betragen die Längen der kurzen Plateaus 9 und 12 jeweils 220 µs und die Länge des Plateaus 6 660 µs. Die übrigen Zeitlängen ergeben sich aus der Gesamtdauer der Periode P.

Die Plateaus 5 und 6 entsprechen einer Lampenbetriebsphase zwischen einer zeitlich vor dem Plateau 5 erfolgenden und nicht bezeichneten Kommutation und der Kommutation 7, die Plateaus 8 und 9 einer weiteren dazu vorzeicheninvertierten Betriebsphase zwischen den Kommutationen 7 und 10 und die Plateaus 11 und 12 einer wiederum vorzeicheninvertierten Betriebsphase zwischen den Kommutationen 10 und 13. Dabei entsprechen die Plateaus 6, 9 und 12 den bislang als Überhöhungspulse bezeichneten Phasen überhöhten Lampenstroms, die untereinander im Strombetrag identisch sind. Der Einsatz des Überhöhungspulses 6 wird getaktet durch die ansteigende Flanke des zweiten SCI-Pulses 2 und in der vergleichsweise größeren Länge bestimmt durch die ebenfalls vergleichsweise größere Länge des ersten SCI-Pulses 1. Dementsprechend wird der Einsatz des Überhöhungspulses 9 bestimmt durch die ansteigende Flanke des SCI-Pulses 3 und die vergleichsweise kürzere Länge des zweiten SCI-Pulses 2. Analog wird der Überhöhungspuls 12 im Einsatz bestimmt durch die ansteigende Flanke des SCI-Pulses 4, in der Länge jedoch durch die kürzere Länge des SCI-Pulses 3.

An die Kommutation 13 schließt sich eine zu der in der Figur gezeigten Halbperiode symmetrische und vorzeicheninvertierte weitere Halbperiode an. Das ganz rechts am Rande der Figur angedeutete, jedoch nicht bezifferte Lampenstromplateau entspricht also vorzeicheninvertiert dem Lampenstromplateau 5, und der in der Figur ganz links eingezeichnete, jedoch nicht bezifferte Überhöhungspuls entspricht invertiert dem Überhöhungspuls 12. Eine Vollperiode des Lampenstroms beträgt also 16,6 ms und hat den Strommittelwert 0. Der Lampenstrom ist also ein reiner Wechselstrom.

Die Lampe wird folglich mit einer mittleren Kommutationsfrequenz von 60 Hz x 3 = 180 Hz betrieben, wohingegen der Stand der Technik bei diesem Beispiel eine Lampenbetriebsfrequenz von 60 Hz vorsehen würde. Dabei bestehen die einzelnen Lampenstromphasen 5, 6 sowie 8, 9 und schließlich 11, 12 jeweils in an sich bekannter Weise aus einem längeren Lampenstromplateau 5, 8 bzw. 11 und einem anschließenden betragsgrößeren kürzeren Lampenstromplateau 6, 9, 12. Die Überhöhungspulse 6, 9, 12 liegen dabei in den in der Figur als Zwischenräume zwischen den Farbfilterphasen G und W, B und R sowie R und G angedeuteten Zwischenphasen, wobei der Überhöhungspuls 6 zwischen G und W in den Anfang der Phase W hineinreicht. Die eigentlichen Farbfilterphasen G, B und R sind also von den Überhöhungspulsen nicht beeinträchtigt. Der Überhöhungspuls 6 kann individuell variiert werden, indem die zeitliche Erstreckung in die Phase W hinein unterschiedlich ausgedehnt wird. Die Überhöhungspulse 9 und 12 bleiben hingegen in Ihrer zeitlichen Länge konstant. Insbesondere kann dabei der Vorteil der Anordnung der Überhöhungspulse in den Zwischenphasen kombiniert werden mit einer dennoch zeitlichen insgesamt nicht durch die Gesamtlänge der Zwischenphasen begrenzten Gesamtzeit der Überhöhungspulse, weil ein Teil der Weißphase W mitgenutzt wird. Dies verbessert in erster Linie die Helligkeit des Beamers und wird daher als vorteilhaft angesehen.

Die zeitliche Verlängerung des Lampenstromplateaus 8 im Vergleich zu den Plateaus 5 und 11 folgt aus der Tatsache, dass in der Zwischenphase zwischen W und B kein Überhöhungspuls und am Anfang der Phase B auch keine Kommutierung vorgesehen ist. Dies hat wiederum den Vorteil, dass trotz der insgesamt geraden Zahl von Farbradsegmenten eine ungerade Zahl von Betriebsphasen des Lampenstroms und damit über die Vollperiode ein reiner Wechselstrom erzielt werden kann. Bei einem 3-Segmentfarbrad ohne Weißsegment als Beispiel könnten sämtliche Zwischenphasen für Überhöhungspulse und nachfolgende Kommutierungen genutzt werden. Eine variable Steuerung der Gesamtdauer der Überhöhungspulse wäre dann beispielsweise dadurch möglich, dass ein zeitlich konstanter Teil der Überhöhungspulse in die jeweiligen Farbfilterphasen hineinragt und der Anteil innerhalb der Zwischenphasen variiert wird.

Zu den weiteren Vorteilen und Merkmalen der Erfindung wird auf die allgemeine Beschreibung vor der konkreten Schilderung des Ausführungsbeispiels verwiesen, die sich auch anhand des Ausführungsbeispiels anschaulicher verstehen lässt, ohne hier wiederholt werden zu müssen. Die Erfindung ist natürlich in gleicher Weise auf ein Projektionssystem in einem großformatigen Bildschirmgerät oder bei irgendeiner anderen Anwendung eines Beleuchtungssystems mit zeitlich sequentieller Farbfilterung und wechselstrombetriebener Lampe möglich.

## Patentansprüche

1. Verfahren zum Betreiben eines Beleuchtungssystems mit einer mit Wechselstrom (I_{L}) betriebenen Hochdruckentladungslampe und einem Farbfiltersystem, das Licht der Lampe zeitlich sequentiell mit einer Mehrzahl Farbfilter (G, W, B, R) filtert, bei welchem Verfahren die Wechselstromversorgung (I_{L}) der Lampe innerhalb einer vollständigen Abfolge der Farbfilterungen (G, W, B, R) zumindest dreifach kommutiert (7, 10, 13), **dadurch gekennzeichnet, dass** mittels eines Vorschaltgeräts
- innerhalb von zeitlichen Abständen (5, 6; 8, 9; 11, 12) zwischen Kommutationen (7, 10, 13) ein zeitlich konstanter Lampenstrom (I_{L}) über einen Großteil (5, 8, 11) des zeitlichen Abstands gegeben ist, wobei eine im Vergleich zu dem zeitlichen Abstand kurze Phase (6, 9, 12) mit einem demgegenüber erhöhten Lampenstrom (I_{L}) auftritt und
- zwischen den einzelnen Farbfilterphasen (G, W, B, R) in der sequentiellen Abfolge jeweils Zwischenphasen vorgesehen sind, die den zeitlichen Bereich abdecken, in dem das Licht der Lampe durch zwei der Farbfilter (G, W, B, R) gleichzeitig gefiltert wird, und bei dem die Phasen (6, 9, 12) mit überhöhtem Lampenstrom (I_{L}) zumindest teilweise in diesen Zwischenphasen liegen.

2. Verfahren nach Anspruch 1, bei dem aufeinander folgende zeitliche Abstände (5, 6; 8, 9; 11, 12) zwischen Kommutationen (7, 10, 13) des Lampenstroms (I_{L}) voneinander verschieden sind.

3. Verfahren nach Anspruch 1, bei dem in der sequentiellen Folge der Farbfilterungen (G, W, B, R) eine Weißphase (W) ohne Farbfilterung enthalten ist und eine Phase des überhöhten Lampenstroms (6) zumindest teilweise in dieser farbfilterfreien Weißphase (W) liegt.

4. Verfahren nach Anspruch 1, bei welchem die Phasen (6, 9, 12) mit überhöhtem Lampenstrom (I_{L}) unmittelbar vor jeder Lampenstromkommutierung (7, 10, 13) liegen.

5. Verfahren nach Anspruch 4, bei dem in der zeitlichen Abfolge der Farbfilterungen vier Farbfilterphasen (G, W, B, R) einschl. der Weißphase vorgesehen sind und eine Phase (6) des überhöhten Lampenstroms (I_{L}) in einer Zwischenphase vor der Weißphase (W) und am Anfang der Weißphase (W) liegt und in jeweils zwei weiteren Zwischenphasen eine Phase (9, 12) überhöhten Lampenstroms (I_{L}) vorgesehen ist.

6. Verfahren nach einem der vorstehenden Ansprüche, bei dem der Lampenstrom (I_{L}) zeitlich periodisch ist und jede Periode zwei symmetrische und vorzeicheninvertierte Halbperioden (5 - 13) aufweist, die jeweils zumindest drei Kommutationen (7, 10, 13) des Lampenstroms (I_{L}) entsprechen.

7. Verfahren nach Anspruch 6, bei dem eine Halbperiode (5 - 13) des Lampenstroms (I_{L}) einer Periode (P) der sequentiellen Farbfilterung (G, W, B, R) entspricht.

8. Verfahren nach Anspruch 1, bei dem die Länge der Phase (6, 9, 12) überhöhten Lampenstroms (I_{L}) und/oder die Überhöhung des Lampenstroms (I_{L}) in dieser Phase zur Elektrodenformung bzw. Lampenbetriebsstabilisierung variiert wird.

9. Verfahren nach Anspruch 1 und 8, bei dem nur die Länge der Phasen (6) überhöhten Lampenstroms (I_{L}), und zwar nur die der vor und zu Anfang der Weißphase (W) liegenden Phase (6) überhöhten Lampenstroms variiert wird.

10. Verfahren nach einem der vorstehenden Ansprüche, bei dem die mittlere Frequenz der Kommutation (7, 10, 13) des Lampenstroms (I_{L}) zumindest 180 Hz beträgt.

11. Verfahren nach einem der vorstehenden Ansprüche, bei dem der Lampenstrom (I_{L}) durch ein elektronisches Vorschaltgerät erzeugt wird, welches über ein digitales Steuersignal (SCI) auf die sequentielle Abfolge der Farbfilterungen (G, W, B, R) abgestimmt wird, in welchem Steuersignal (SCI) eine Pulsflanke die zeitliche Lage einer Phase (6, 9, 12) überhöhten Lampenstroms (I_{L}) und eine Pulslänge die zeitliche Länge einer Phase (6, 9, 12) überhöhten Lampenstroms bestimmt (I_{L}).

12. Elektronisches Vorschaltgerät, **dadurch gekennzeichnet, dass** das Vorschaltgerät für ein Verfahren nach einem der Ansprüche 1 - 11 ausgelegt ist.

13. Beleuchtungssystem mit einer mit Wechselstrom betriebenen Entladungslampe, einem Farbfiltersystem und einem elektronischen Vorschaltgerät nach Anspruch 12, welches Beleuchtungssystem für ein Verfahren nach einem der Ansprüche 1-11 ausgelegt ist.

14. Rückprojektions-Bildschirmgerät mit einem Beleuchtungssystem nach Anspruch 13.

15. Beamer mit einem Beleuchtungssystem nach Anspruch 13.

## Claims

1. Method for operating an illuminating system having a high-pressure discharge lamp operated by alternating current (I_{L}), and having a color filter system that filters light from the lamp sequentially in time with the aid of a plurality of color filters (G, W, B, R), in the case of which method the alternating current supply (I_{L}) of the lamp is commutated (7, 10, 13) at least three times within a complete sequence of color filterings (G, W, B, R), **characterized in that**, using a ballast,
- within temporal spacings (5, 6; 8, 9; 11, 12) between commutations (7, 10, 13) there is a temporally constant lamp current (I_{L}) over a large part (5, 8, 11) of the temporal spacing, there occurring a phase (6, 9, 12) that is shorter by comparison with the temporal spacing and has a lamp current (I_{L}) increased by contrast therewith, and
- there are respectively provided between the individual color filter phases (G, W, B, R) in the sequential sequence interphases that cover the time period in which the light from the lamp is simultaneously filtered by two of the color filters (G, W, B, R), and in which the phases (6, 9, 12) with an overincreased lamp current (I_{L}) lie at least partially in these interphases.

2. Method according to Claim 1, in which consecutive temporal spacings (5, 6; 8, 9; 11, 12) between commutations (7, 10, 13) of the lamp current (I_{L}) differ from one another.

3. Method according to Claim 1, in which a white phase (W) without color filtering is included in the sequential sequence of the color filterings (G, W, B, R), and a phase of the overincreased lamp current (6) lies at least partially in this white phase (W) free of color filtering.

4. Method according to Claim 1, in which the phases (6, 9, 12) with an overincreased lamp current (I_{L}) lie directly before each lamp current commutation (7, 10, 13).

5. Method according to Claim 4, in which four color filter phases (G, W, B, R) including the white phase are provided in the temporal sequence of color filterings, and one phase (6) of the overincreased lamp current (I_{L}) lies in an interphase before the white phase (W) and at the start of the white phase (W), and a phase (9, 12) of overincreased lamp current (I_{L}) is provided in respectively two further interphases.

6. Method according to one of the preceding claims, in which the lamp current (I_{L}) is periodic in time, and each period has two half periods (5-13) which are symmetrical and of inverted sign and respectively correspond to at least three commutations (7, 10, 13) of the lamp current (I_{L}).

7. Method according to Claim 6, in which a half period (5-13) of the lamp current (I_{L}) corresponds to a period (P) of the sequential color filtering (G, W, B, R).

8. Method according to Claim 1, in which the length of the phase (6, 9, 12) of overincreased lamp current (I_{L}) and/or the overincrease of the lamp current (I_{L}) in this phase are/is varied for the purpose of electrode shaping and/or stabilizing the lamp operation.

9. Method according to Claims 1 and 8, in which only the length of the phases (6) of overincreased lamp current (I_{L}), and specifically only that of the phase (6) of overincreased lamp current lying before and at the start of the white phase (W) is varied.

10. Method according to one of the preceding claims, in which the mean frequency of the commutation (7, 10, 13) of the lamp current (I_{L}) is at least 180 Hz.

11. Method according to one of the preceding claims, in which the lamp current (I_{L}) is generated by an electronic ballast that is tuned via a digital control signal (SCI) to the sequential sequence of the color filterings (G, W, B, R), in which control signal (SCI) a pulse edge determines the temporal position of a phase (6, 9, 12) of overincreased lamp current (I_{L}), and a pulse length determines the temporal length of a phase (6, 9, 12) of overincreased lamp current (I_{L}).

12. Electronic ballast that is designed for a method according to one of Claims 1-11.

13. Illuminating system having a discharge lamp operated by alternating current, a color filter system and an electronic ballast according to Claim 12, which illuminating system is designed for a method according to one of Claims 1-11.

14. Back projection visual display unit having an illuminating system according to Claim 13.

15. Beamer having an illuminating system according to Claim 13.

## Revendications

1. Procédé pour faire fonctionner un système d'éclairage comprenant une lampe à décharge à haute pression fonctionnant en courant alternatif (I_{L}) et un système de filtrage chromatique qui filtre la lumière de la lampe séquentiellement dans le temps avec plusieurs filtres chromatiques (G, W, B, R), procédé dans lequel l'alimentation en courant alternatif (I_{L}) de la lampe est commutée au moins trois fois (7, 10, 13) à l'intérieur d'une suite complète de filtrages chromatiques (G, W, B, R), **caractérisé par le fait que**, au moyen d'un ballast,
- il y a à l'intérieur d'intervalles temporels (5, 6 ; 8, 9 ; 11, 12) entre des commutations (7, 10, 13) un courant de lampe (I_{L}) temporellement constant sur une grande partie (5, 8, 11) de l'intervalle temporel, une phase (6, 9, 12) qui est courte en comparaison de l'intervalle temporel et qui présente un courant de lampe (I_{L}) comparativement accru apparaissant alors, et
- il est prévu respectivement, entre les différentes phases de filtrage chromatique (G, W, B, R) dans la suite séquentielle, respectivement des phases intermédiaires qui couvrent la plage temporelle dans laquelle la lumière de la lampe est filtrée simultanément par deux des filtres chromatiques (G, W, B, R), les phases (6, 9, 12) à courant de lampe accru (I_{L}) étant situées au moins en partie dans ces phases intermédiaires.

2. Procédé selon la revendication 1, dans lequel des intervalles temporels successifs (5, 6 ; 8, 9 ; 11, 12) entre des commutations (7, 10, 13) du courant de lampe (I_{L}) sont différents les uns des autres.

3. Procédé selon la revendication 1, dans lequel une phase blanche (W) sans filtrage chromatique est contenue dans la suite séquentielle des filtrages chromatiques (G, W, B, R) et dans lequel une phase de courant de lampe accru (6) est située au moins en partie dans cette phase blanche (W) sans filtrage chromatique.

4. Procédé selon la revendication 1, dans lequel les phases (6, 9, 12) avec courant de lampe accru (I_{L}) sont situées immédiatement avant chaque commutation de courant de lampe (7, 10, 13).

5. Procédé selon la revendication 4, dans lequel il est prévu dans la suite temporelle des filtrages chromatiques quatre phases de filtrage chromatique (G, W, B, R) y compris la phase blanche (W), dans lequel une phase (6) du courant de lampe accru (I_{L}) est située dans une phase intermédiaire avant la phase blanche (W) et au début de la phase blanche (W) et dans lequel une phase (9, 12) de courant de lampe accru (I_{L}) est prévue dans deux autres phases intermédiaires respectives.

6. Procédé selon l'une des revendications précédentes, dans lequel le courant de lampe (I_{L}) est périodique dans le temps et dans lequel chaque période comporte deux demi-périodes symétriques et de signes contraires (5 - 13) qui correspondent à chaque fois à au moins trois commutations (7, 10, 13) du courant de lampe (I_{L}).

7. Procédé selon la revendication 6, dans lequel une demi-période (5 - 13) du courant de lampe (I_{L}) correspond à une période (P) du filtrage chromatique séquentiel (G, W, B, R).

8. Procédé selon la revendication 1, dans lequel on modifie la longueur de la phase (6, 9, 12) de courant de lampe accru (I_{L}) et/ou l'augmentation du courant de lampe (I_{L}) dans cette phase pour la mise en forme d'électrode ou pour la stabilisation de fonctionnement de lampe.

9. Procédé selon la revendication 1 et 8, dans lequel on modifie seulement la longueur des phases (6) de courant de lampe accru (I_{L}), à savoir seulement celle de la phase (6) de courant de lampe accru située avant et au début de la phase blanche (W).

10. Procédé selon l'une des revendications précédentes, dans lequel la fréquence moyenne de la commutation (7, 10, 13) du courant de lampe (I_{L}) vaut au moins 180 Hz.

11. Procédé selon l'une des revendications précédentes, dans lequel le courant de lampe (I_{L}) est produit par un ballast électronique qui est réglé par l'intermédiaire d'un signal de commande numérique (SCI) sur la suite séquentielle des filtrages chromatiques (G, W, B, R), signal de commande (SCI) dans lequel un flanc d'impulsion détermine la position temporelle d'une phase (6, 9, 12) de courant de lampe accru (I_{L}) et une longueur d'impulsion détermine la longueur temporelle d'une phase (6, 9, 12) de courant de lampe accru (I_{L}).

12. Ballast électronique, **caractérisé par le fait que** le ballast est conçu pour un procédé selon l'une des revendications 1 à 11.

13. Système d'éclairage comprenant une lampe à décharge fonctionnant en courant alternatif, un système de filtrage chromatique et un ballast électronique selon la revendication 12, lequel système d'éclairage est conçu pour un procédé selon l'une des revendications 1 à 11.

14. Terminal avec écran à rétroprojection comprenant un système d'éclairage selon la revendication 13.

15. Vidéoprojecteur comprenant un système d'éclairage selon la revendication 13.
